# EUROPEAN PATENT SPECIFICATION

(11) **EP 3 491 928 B1**
(45) Date of publication and mention of the grant of the patent: **20.05.2020**
(21) Application number: 18208938.3
(22) Date of filing: 28.11.2018
(51) Int. Cl.: A22C 11/00, A22C 11/12

(54) **MACHINE FOR TYING FOOD PRODUCTS**
MASCHINE ZUM BINDEN VON LEBENSMITTELPRODUKTEN
MACHINE DE FIXATION DE PRODUITS ALIMENTAIRES

(30) Priority: 29.11.2017 IT 201700136933
(43) Date of publication of application: 05.06.2019
(73) Proprietor: INOX Meccanica S.R.L., 46044 Goito, Frazione Solarolo MN (IT)
(72) Inventor: BOLZACCHINI, Giovanni, 25015 Desenzano del Garda BS (IT)
(74) Representative: Modiano, Micaela Nadia

(56) References cited:
- EP-A2- 0 716 018
- WO-A1-2006/056272
- DE-C1- 4 425 233
- US-A- 1 541 531

## Description

The present invention relates to a machine for tying food products.

As is known, in the food industry sector tying machines are in use which make it possible to apply around substantially cylindrical food products, such as for example cuts of meat or encased meat products, an elastically extendable twine or string that makes it possible to maintain the shape of the food product being prepared.

In particular, tying machines are known which are constituted by a fixed framework, which supports a conveyor, which enables the axial movement of the product to be tied along an advancement direction, and a winding device, which has a spool for unwinding the twine, which can move along a circular trajectory, around the advancement direction of the product, and a locking means which make it possible to lock or at least engage the free end of the twine, or another portion thereof, with respect to the fixed framework, so as to be able to wind the twine around the product placed on the conveyor, forming at least one annular or helical winding, according to whether the food product is kept still or is moved with respect to the fixed framework, during the application of the twine by the winding device.

Machines of this type are further provided with a tying device which, at the end of winding the twine about the food product, makes it possible to connect, with a knot, a first length of the twine, which extends from the locking means for locking the twine toward the food product, with at least one second length of the twine, which extends from the food product toward the spool and which is located, in the usual operating modes of the machine, in a position below the first length of the twine, so as to close the windings of the twine on the food product.

In particular, an insertion device cooperates with the tying device and is arranged below the region where the first length and the second length are located and, before the activation of the tying device, it performs an upward movement that enables the insertion device to pick up the lengths of the twine to be knotted in order to bring them to a preset position in which they can subsequently be engaged by the tying device in order to tie the knot.

A problem that has been found with these machines is that, with food products that have a mutually different diametrical space occupation, the relative position of the first length of twine to be knotted changes with respect to the second length after winding the twine around the food product, with the consequence that the insertion device is not always capable of properly executing its function and the tying device cannot execute the connection of the two lengths of twine.

In particular, when large-diameter food products are processed with these machines, the first length of twine to be knotted can end up too far above the second length of twine, and above the tying device proper, to allow the insertion device to engage it and, therefore, to allow the tying device to tie the knot.

Machines for for tying up food products with a string are for example known from International patent application WO 2006/056272 A1 and from German patent DE 44 25 233 C1.

The aim of the present invention is to provide a machine for tying food products which improves the known art in one or more of the above mentioned aspects.

Within this aim, an object of the invention is to provide a machine for tying food products that ensures the correct execution of the knotting of the twine, independently of the diametrical dimensions of the food products to be tied.

Another object of the invention is to provide a machine for tying food products that is capable of offering high assurances of reliability and safety of operation.

Another object of the present invention is to overcome the drawbacks of the known art in an alternative manner to any existing solutions.

Another object of the invention is to provide a machine for tying food products which is simple in terms of construction and which is competitive from a purely economic viewpoint as well.

This aim and these and other objects which will become better apparent hereinafter are achieved by a machine for tying food products according to claim 1, optionally provided with one or more of the characteristics of the dependent claims.

Further characteristics and advantages of the invention will become better apparent from the description of a preferred, but not exclusive, embodiment of the machine according to the invention, which is illustrated by way of non-limiting example in the accompanying drawings wherein:

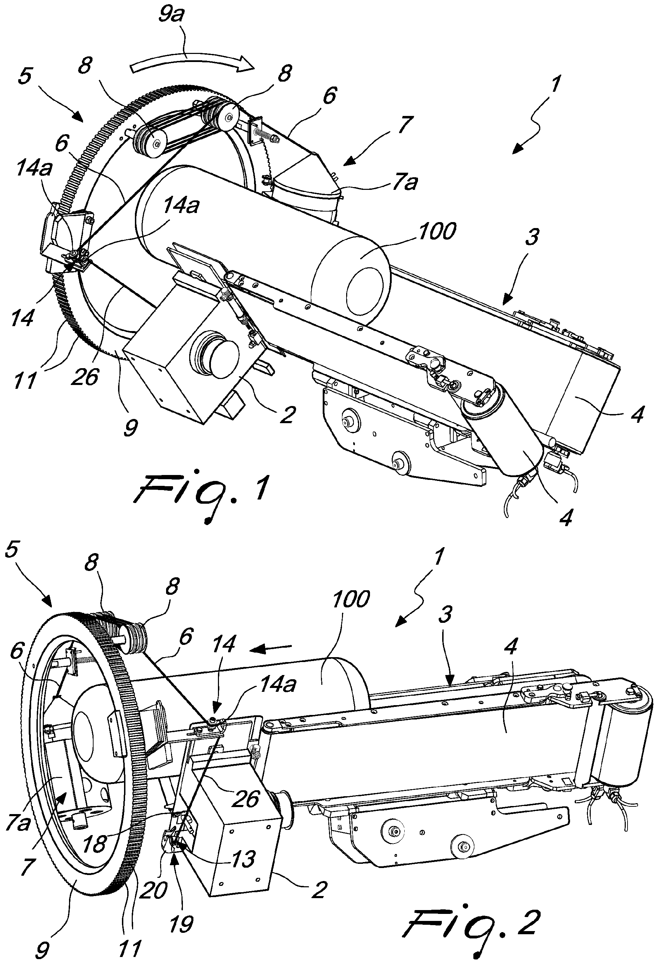

Figure 1 is a perspective view of a portion of the machine according to the invention;
Figure 2 is a perspective view from another angle of a portion of the machine according to the invention;

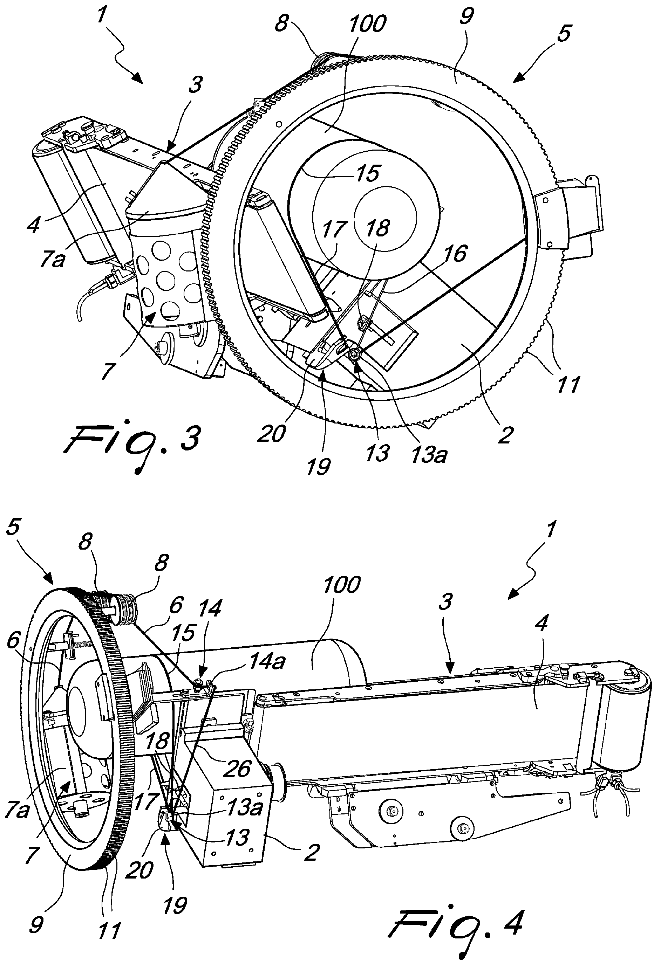

Figure 3 is a perspective view of a portion of the machine according to the invention in which a winding of twine has been applied on the food product and an insertion device is in the inoperative position;
Figure 4 is a perspective view from a different angle of a portion of the machine according to the invention in the condition in Figure 3;

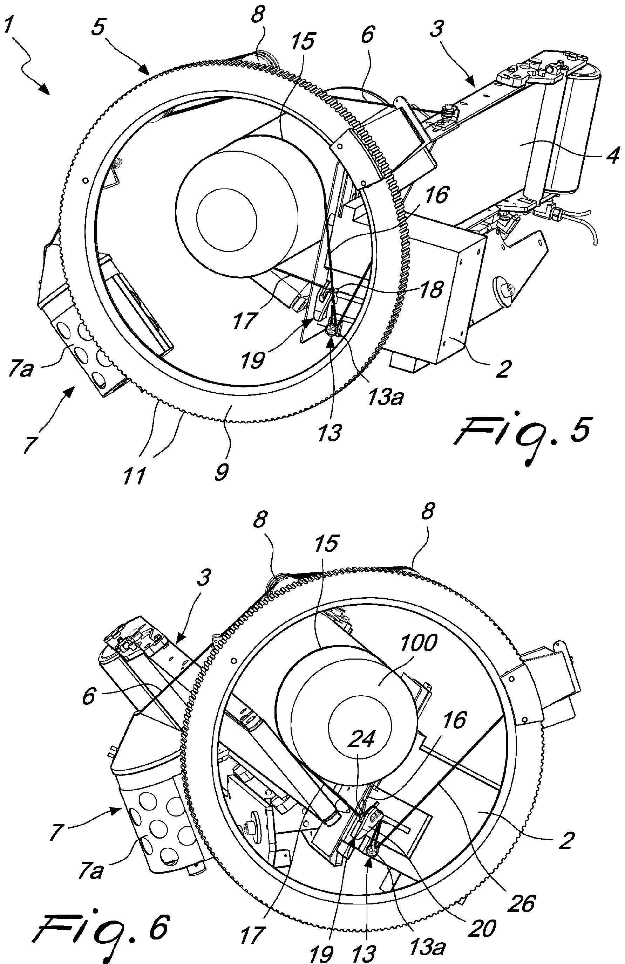

Figure 5 is a perspective view of a portion of the machine in which a winding of twine has been applied on the food product and in which the insertion device is shown in the operative position;
Figure 6 is a perspective view of a portion of the machine according to the invention in which a winding of twine has been applied on the food product, the insertion device is in the operative position, and an auxiliary positioning device is shown in the active position;
Figure 7 is a partial side view of the machine according to the invention showing the auxiliary positioning device in the inactive position and the insertion device in the inoperative position;
Figure 8 is a side view of a position of the machine according to the invention in which the insertion device is in the operative position and the auxiliary positioning device is in the inactive position;
Figure 9 is a side view of a position of the machine according to the invention in which the insertion device is in the operative position and the auxiliary positioning device is in the active position;
Figure 10 is a partial perspective view of the machine according to the invention with the auxiliary positioning device in the inactive position and the insertion device in the inoperative position;

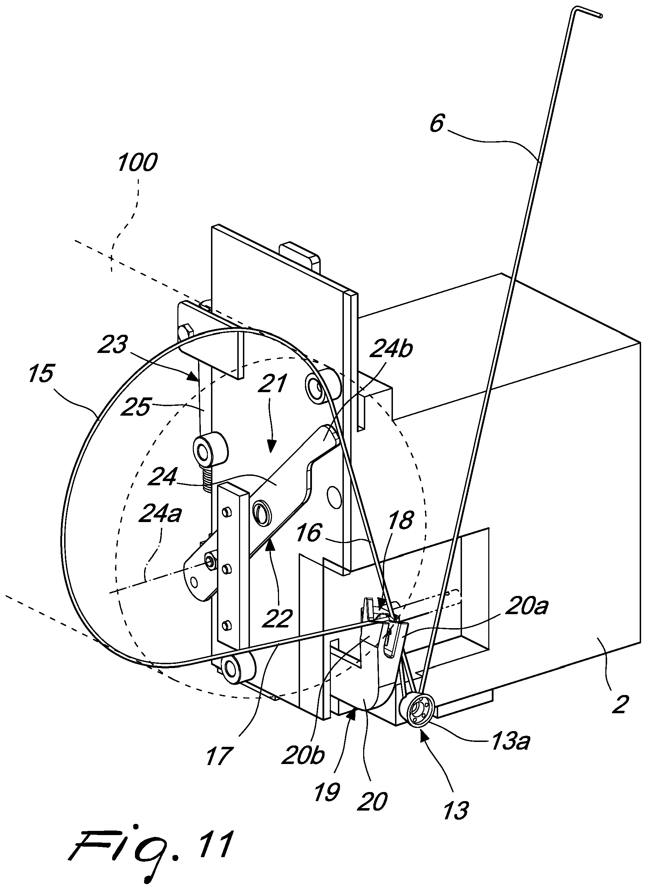

Figure 11 is a perspective view of the portion of machine in Figure 10 with the auxiliary positioning device in the inactive position and the insertion device in the operative position;
Figure 12 is a perspective view of the same portion of machine in Figure 10 with the auxiliary positioning device in the active position and the insertion device in the operative position;

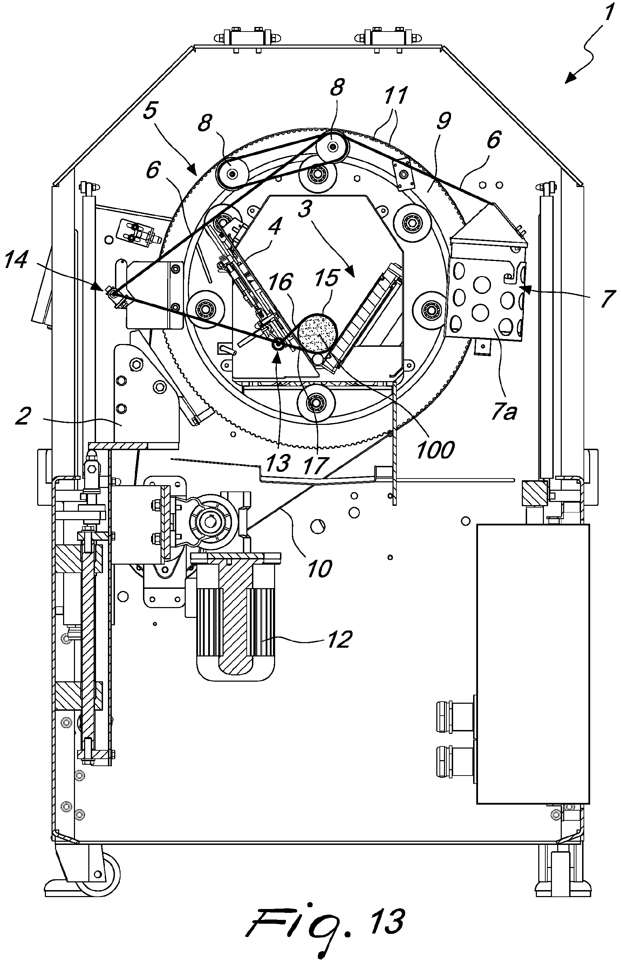

Figure 13 is a front elevation view of the machine according to the invention during the application of the twine on a small-diameter food product being processed;

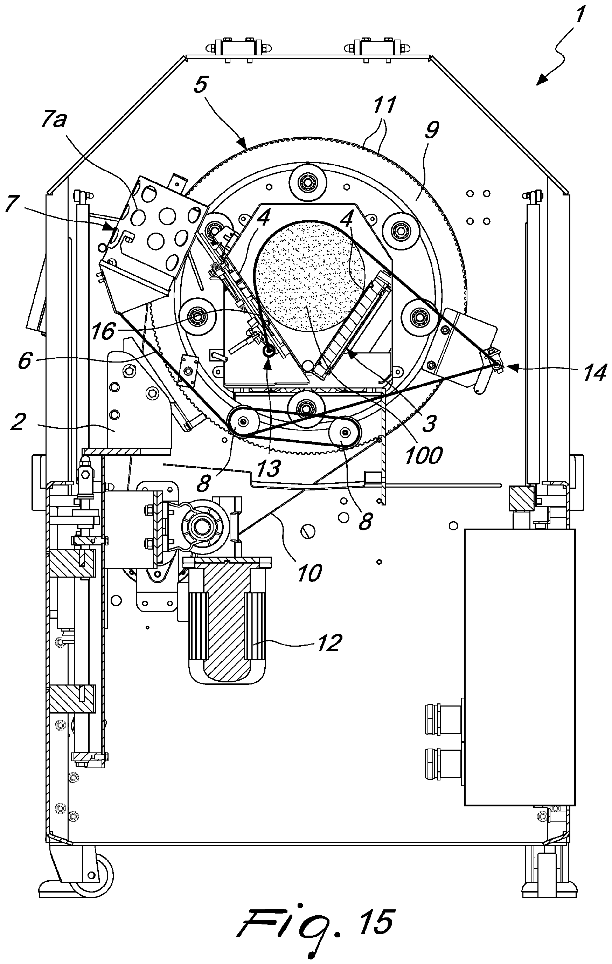

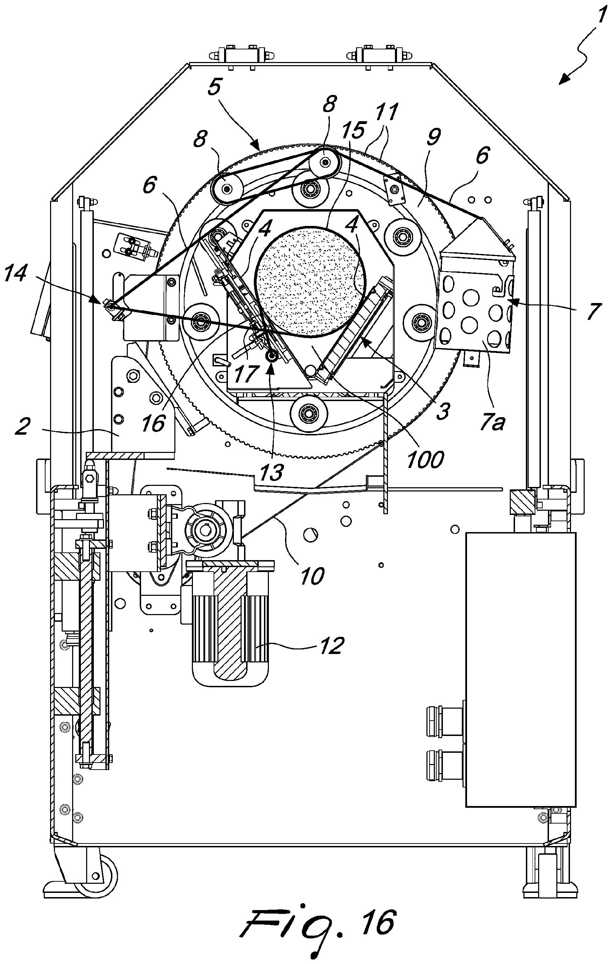

Figures 14, 15 and 16 are front elevation views of the machine according to the invention in different steps of application of a winding of twine on a large-diameter food product;
Figures 17, 18, 19 are side views of different operating conditions of a catch belonging to a locking means for locking the twine.

With reference to the figures, the machine for tying food products according to the invention, generally designated by the reference numeral 1, comprises a fixed framework 2 which supports supporting means 3 for at least one food product 100 to be tied, which can, for example, have a substantially cylindrical shape structure.

Such supporting means 3 can be, conveniently, provided by at least one conveyor 4 which makes it possible to move the food product 100 along an advancement direction substantially parallel to its axis.

According to the example shown, the supporting means 3 are, in particular, provided by a pair of belt conveyors 4, which are mutually opposite, arranged on inclined planes, and mutually converge downward.

The machine 1 is provided with a winding device 5, the function of which is to wind at least one twine 6, conveniently elastically extendable, around the food product 100, which is arranged on the supporting means 3.

In particular, the winding device 5 comprises feeding means 7 for feeding the twine 6, which are provided by a spool for unwinding a reel of twine 6 accommodated in a container 7a, and, advantageously, by an assembly for accumulating and tensioning the twine 6 which is constituted by transmission rollers 8 of the twine.

The feeding means 7 for feeding the twine 6 can move along a circular trajectory around the supporting means 3 by way of means for moving. More specifically, the feeding means 7 are supported by a movement ring 9, which is arranged around the supporting means 3, so that it can be passed through axially by the food product 100, and which can be actuated in rotation, about its own axis, with respect to the fixed framework 2. More specifically, the movement ring 9 is positioned substantially at an end of, or at an interruption in, the supporting means 3, and its rotary actuation is obtained by way of a toothed belt 10 meshing with a set of teeth, which is defined with its teeth 11 on the outer edge of the movement ring 9, and is actuated by a motor 12 supported by the fixed framework 2.

On the frame 2 there are locking means 13 for locking at least one portion of the twine 6, which have, conveniently, an engagement element, which is constituted, for example, by a catch 13a, which is capable of engaging a portion of the twine 6 and optionally also of clamping it against the fixed framework 2. For example, at least in the initial step of application of the twine 6 about the food product 100, the catch 13a makes it possible to immobilize, with respect to the fixed framework 2, the free end of the twine 6, so as to fix it with respect to the fixed framework 2 and, in other steps of the operation of the machine, makes it possible to engage other portions of the twine 6 with respect to the fixed framework 2.

The twine 6 further engages guiding means 14, which are constituted, for example, by one or more transmission elements 14a, which are supported, conveniently, by the movement ring 9, and which make it possible to guide the twine so as to form, as a consequence of the rotation of the movement ring 9 along a direction of rotation 9a, at least one winding 15, annular or helical, of the twine 6 around the food product 100. In particular, the aforementioned guiding means 14 make it possible to subtend, during the application of the windings 15 on the food product 100, a straight section of twine 6 between the guiding means 14 and the food product 100, which, following the rotation of the movement ring 9, moves on a plane that is substantially perpendicular to the axis of the windings 15 being executed.

Once the winding device 5 has executed a desired number of windings 15 on the food product 100, a first length 16 of the twine 6, which extends from the locking means 13 for locking the twine 6 toward the food product 100, is connected by way of tying means with at least one second length 17 of that twine, which extends from the food product 100 toward the feeding means 7 for feeding the twine 6.

According to the example shown, the first length 16 of the twine 6 is arranged above the second length 17 of the twine 6. More specifically, the first length 16 of the twine 6 extends from the locking means 13 to the upper portion of the food product 100 i.e. to the portion of the food product 100 that is located on the opposite side with respect to the supporting means 3, meaning that the position of that portion of food product 100 with respect to the supporting means 3 and, consequently, also the position of the first length 16 can vary in height according to the diameter size of the food product 100, while the second length 17 of the twine 6 extends from the lower portion of the food product 100, which is resting on the supporting means 3, to the locking means 13.

The aforementioned tying means comprise a tying device 18, which, in a way that is known per se, is capable of executing a connecting knot between the first length 16 and the second length 18 of the twine 6. In order to enable the tying device 18 to engage the first length 16 and the second length 17, there is an insertion device 19 which cooperates with the tying device 18 and the function of which is to feed at least one portion of the first length 16 and at least one portion of the second length 17 of the twine 6 to the tying device 18, bringing such portions of the first length 16 and of the second length 17 of the twine 6 to the region where the tying device 18 acts, so that the latter can tie the knot.

The insertion device 19 has at least one contact element 20 which is designed to engage the first length 16 and the second length 17 of the twine 6 and which can move on command between at least an inoperative position, in which it is spaced apart from the first length and from the second length 17 of the twine 6, and an operative position, in which the contact element 20 is in a preset position, with respect to the tying device 18, in which the tying device 18 is able to engage at least one portion of the first length 16 and of the second length 17 of the twine 6 in order to be able to tie the knot with them.

As illustrated, such contact element 20 has, conveniently, a fork shape structure with a pair of tines 20a and 20b, which, at their free ends, have a saddle which is adapted to receive the portions of the first length 16 and of the second length 17 of the twine 6 to be fed to the tying device 18 and which, in the operative position of the contact element 20, are arranged on opposite sides with respect to the tying device 18, being brought, with their free ends, substantially above the tying device 18.

According to the example shown, the contact element 20 is arranged below the first length 16 and the second length 17 and it performs, in its transition from the inoperative position to the operative position, an upward movement from below in the direction of the tying device 18.

The machine further comprises an auxiliary positioning device 21, which can be activated on command to bring at least one portion of at least one of the two lengths 16, 17 of the twine 6 to a grip position which is located along the region affected by the movement of the contact element 20 from its inoperative position to its operative position, so as to ensure the engagement of that length of the twine 6 by the contact element 20 and its consequent correct feeding to the tying device 18.

Conveniently, the auxiliary positioning device 21 comprises an engagement element 22 which can be actuated to move, with respect to the fixed framework, in order to engage at least the first length 16 of the twine 6 and bring, as a consequence of its movement, at least one portion of the first length 16 of the twine 6 to the grip position.

In this manner, even if the food product 100 has a relatively large diameter, the actuation of the auxiliary positioning device 21 makes it possible to also arrange the first length 16 of the twine 6 in a position suitable to enable the contact element 20 of the insertion device 19 to engage it correctly and, therefore, feed it to the tying device 18.

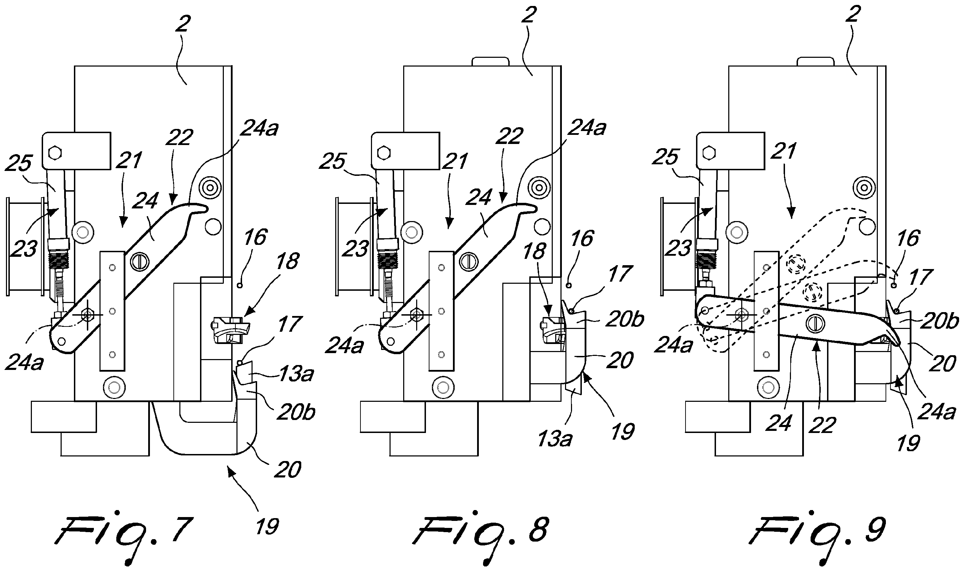

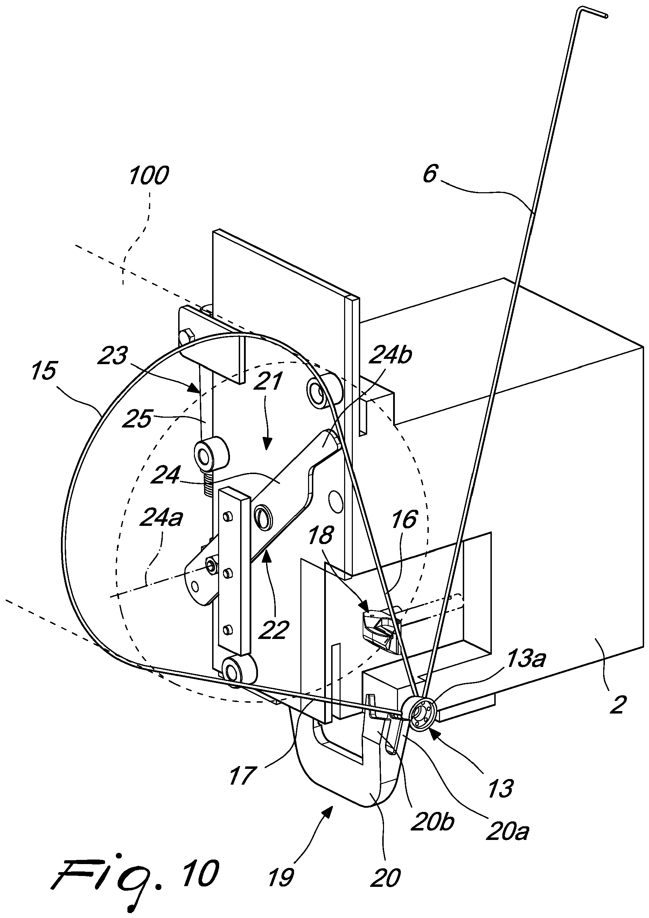

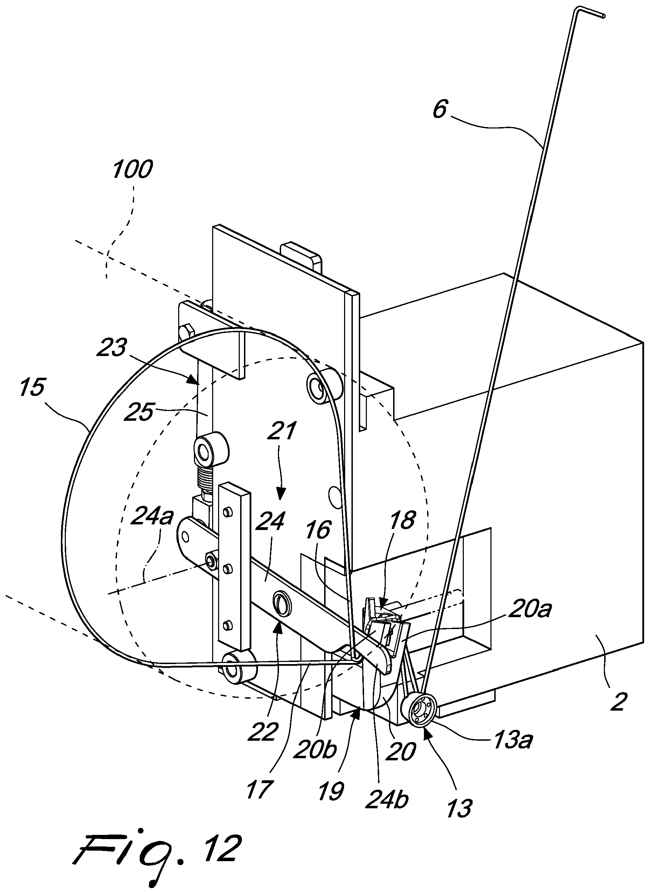

Conveniently, the engagement element 22 is arranged between the locking means 13 for locking the twine 6 and the supporting means 3 of the food product 100 and it can move, by the actuation of actuation means 23, between an inactive position, shown in particular in Figures 7 and 10, in which it is disengaged from the first length 16 of the twine 6, and an active position, shown in particular in Figures 9 and 12, in which it is engaged with such first length 16 of the twine 6 and it is arranged so that a portion of the first length 16, located between the engagement element 22, brought to the active position, and the locking means 13, is in the grip position, so that it can be engaged by the contact element 20 of the insertion device 18.

As illustrated, the engagement element 22 of the auxiliary positioning device 21 comprises, conveniently, a lever 24, which can oscillate with respect to the fixed framework 2, about a rotation axis 24a, substantially perpendicular to the axis of the windings 15 of the twine 6 applied on the food product 100 i.e. to the advancement direction of the food product 100 on the conveyors 4, and which has an engagement end 24b for the first length 16 of the twine 6, which is, conveniently, contoured to define an engagement recess for the first length 16 of the twine 6.

Advantageously, the actuation means 23 comprises a pneumatic cylinder 25 which acts between the lever 24 and the fixed framework 2.

Still according to the example shown, the engagement element 22 is arranged so as to be, in the inactive position, above the positions in which the first length 16 of the twine 6 can be positioned, and it performs, in its transition from the inactive position to the active position, a downward movement approaching the insertion device 19 and, more specifically, approaching the contact element 20.

It must be noted that the catch 13a of the locking means 13 is also capable of acting as a transmission element of the twine 6, in order to define the second length 17 of the twine which is connected by the tying device 18 to the first length 16 of the twine 6.

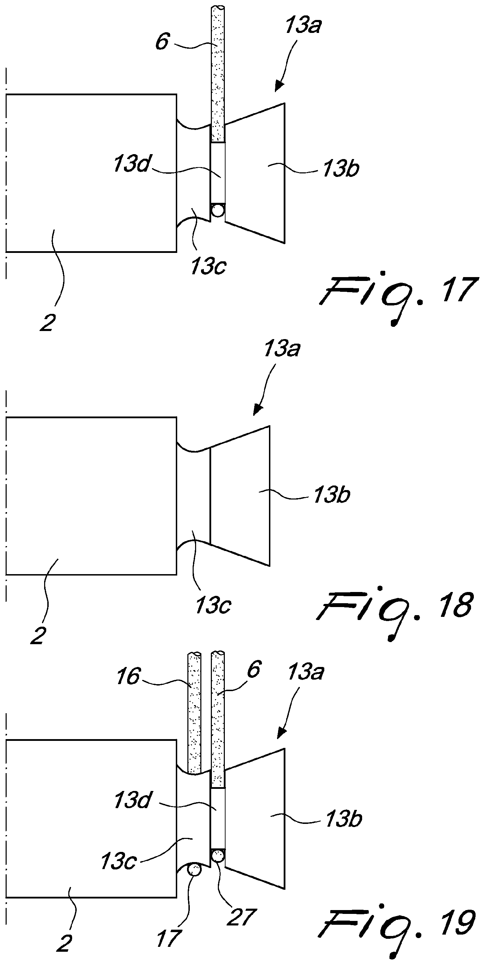

Conveniently, as shown in detail in Figures 17, 18, 19, the catch 13a comprises a head 13b and a shank 13c, on the lateral surface of which a circumferential groove is defined to receive the twine 6.

In more detail, the shank 13c of the catch 13a is fixed to the fixed framework 2, while the head 13b can be moved axially on command toward or away from the shank 13c, so that the catch 13a can pass between at least a closed condition, in which the head 13b is pressed against the shank 13c, and at least an open condition, in which the head 13b is spaced apart from the shank 13c. In particular, the head 13b is axially connected to a shaft 13d, of smaller size than the head 13b, which can slide axially with respect to the shank 13c, in order to permit the shifting of the head 13b with respect to the shank 13c between the open condition and the closed condition.

Again with reference to Figures 17, 18 and 19, it can be seen that, in the open condition, the catch 13a is capable of receiving the twine 6 between the head 13b and the shank 13c, engaging it by way of the shaft 13d, in order to be able to subsequently clamp it between the head 13b and the shank 13c by passing to the closed condition.

In the closed condition, the catch 13a is capable of receiving the twine 6 in the circumferential reception groove defined in the shank 13c.

Advantageously, the head 13b is substantially frustum-shaped and is tapered in the direction of the shank 13c so as to provide a surface that is inclined with respect to the axis of the catch 13a and which facilitates the sliding of the portion of twine 6, upon engagement with the head 13b, towards the end of the head 13b directed towards the shank 13c, so as to permit the settling in the reception groove of the shank 13c, when the catch 13a is in the closed condition, or in the space between the shank 13c and the head 13b, at the shaft 13d, when the catch 13a is in the open condition.

In order to allow the twine 6 to pass in front of the catch 13a, during the rotation of the movement ring 9 or, alternatively, to be engaged by that catch, the contact body 20 of the insertion device 19, in addition to being movable between the inoperative position and the operative position, can also be moved between an advanced position, in which it is close to the plane on which moves the length of twine 6 that extends from the guiding means 14 to the food product 100, during the rotation of the movement ring 9, so as to be able to come into contact with the length of twine 6 that extends from the guiding means 14 to the food product 100 in order to make it pass in front of that catch without the latter being able to engage it, and a retracted position, in which it is spaced apart from the plane on which moves the length of twine 6 that extends from the guiding means 14 to the food product 100, so as to enable the catch 13a to engage the twine 6, so as to be able to define the second length 17 of the twine 6 between the food product 100 and that catch, once the feeding means 7 for feeding the twine 6 have gone past the catch 13a in their movement along the circular trajectory imposed by the movement ring 9.

For completeness, it should be noted that the machine is provided with cutting means, not shown, which intervene preferably after the tying device 18 has tied a knot between the first length 16 and the second length 17 of the twine 6 or in any case after the tying device 18 has engaged the first length 16 and the second length 17, and which cut at least the portion of the second length 17 that is formed between the region in which the knot is tied by the tying device 18 and the feeding means 7 for feeding the twine 6. Conveniently, the cutting means are positioned between the tying device 18 and the locking means 13.

Operation of the machine according to the invention is as follows.

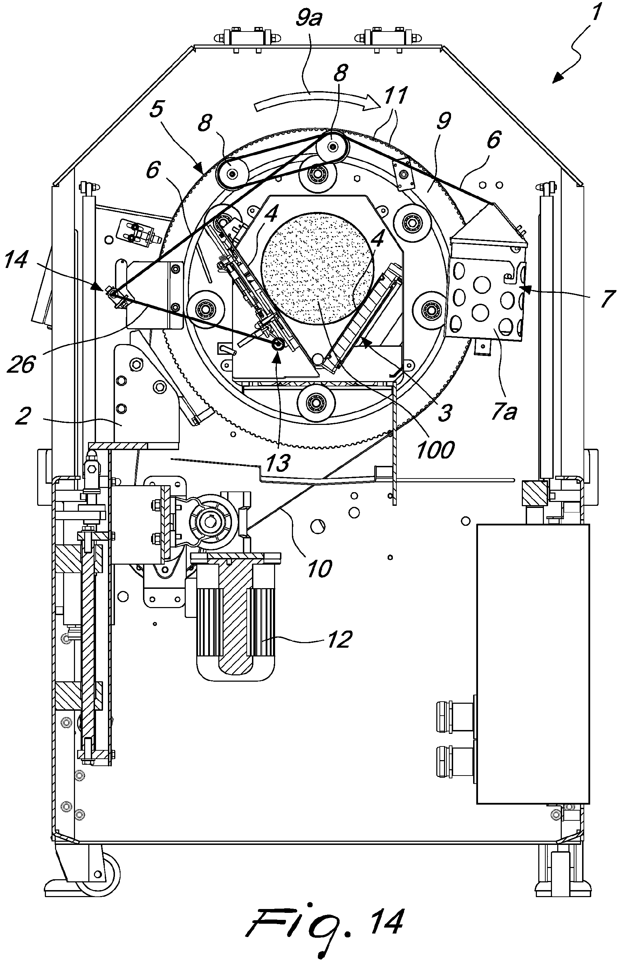

According to a first operating mode of the machine, the free end of the twine 6 is fixed to the locking means 13, by way of clamping it between the head 13b and the shank 13c of the catch 13a brought to the closed condition, as shown in Figure 17, initially forming, between the locking means 13 and the transmission elements 14 arranged on the movement ring 9, a straight section 26 of twine 6, as in the situation shown, for example, in Figure 14, which will later define the first length 16 of the twine 6 which will be used for knotting the twine 6.

The food product 100 is arranged on the supporting means 3 and it is brought with a portion thereof to the winding device 5 by way of the conveyors 4, which stop when the portion of the food product 100 on which it is desired to apply at least one winding 15 of twine 6 reaches the movement ring 9.

At this point, the movement ring 9 is rotated in the direction of rotation 9a so that the straight section 26 of the twine 6 can rotate until it comes into contact with the food product 100, winding around it, so as to provide at least one winding 15, and thus forming, between the locking means 13 and the food product 100, the first length 16 of twine 6, the arrangement of which with respect to the fixed framework 2 will depend on the diameter of the food product 100.

In particular, when applying multiple windings 15 around the food product 100, the contact body 20 of the insertion device 19 is kept in the advanced position until the last winding 15 is made, after which the contact body 20 is brought to the retracted position so as to allow the catch 13a to engage, with its head 13b, the length of twine 6 that extends from the food product 100 to the feeding means 7 for feeding the twine 6, once these means have gone past the catch 13a in continuing their movement, so as to define the second length 17 of twine.

At this point the tying means come into operation and in particular the insertion device 19 is activated so as to move the contact element 20 from its inoperative position to its operative position, with an upward movement from below.

Simultaneously, the auxiliary positioning device 21 comes into operation and the engagement element 22 is moved from the inactive position to the active position, so as to engage the first length 16 of the twine 6. In particular, under the action of the pneumatic cylinder 25, the lever 24 is made to rotate about its oscillation axis 24a, so that its engagement end 24b is lowered so as to engage the first length 16 of twine and bring the portion of the first length 16 of the twine 6 that is formed between the engagement element 22 and the locking means 13 to a grip position, located along the region of movement of the contact element 20, so that it can be engaged by the contact element 20 at least when the latter reaches the operative position, so that it can be correctly fed to the tying device 18, as shown for example in Figure 12. At this point, the tying device 18 can subsequently proceed to tie a knot between the portions of the first length 16 and of the second length 17 which have been brought by the insertion device 19 and by the auxiliary positioning device 21 to its region of action.

It should be noted that the auxiliary positioning device 21 can also be activated before or after the activation of the insertion device 19.

Once the portions of the first length 16 and of the second length 17 engaged by the contact element 20 are picked up by the tying device 18, the engagement element 22 is returned to the inactive position and the contact element 20 is returned to the inoperative position.

At this point, the catch 13a is brought to the open condition so as to disengage the free end of the twine 6 and enable the second length 17 of twine 6 to be brought between the head 13b and the shank 13c of the catch 13a, engaging the shaft 13d. Subsequently, the catch 13a is brought to the closed condition, so as to clamp the second length 17 of the twine 6 between the head 13b and the shank 13c, so as to lock it, and the cutting means are activated, which cut the portion of the second length 17 of the twine 6, which extends from the knot tied by the tying device 18 to the catch 13a.

The machine is then ready to apply at least another winding 15 of twine 6 around the food product 100 after having moved the food product 100 by way of the conveyors 4 in the advancement direction in order to bring a new portion of the food product to the winding device 5.

According to a different operating mode of the machine according to the invention, the starting situation is still like that shown in Figure 14, in which the free end of the twine 6 is fixed to the fixed framework 2 by the locking means 13, by way of its being clamped between the head 13b and the shank 13c of the catch 13a brought to the closed condition, as shown in Figure 17, and a straight section 26 of the twine 6 extends from the locking means 13 to the transmission elements 14 of the twine 6 which are arranged on the movement ring 9.

The food product 100 is arranged on the supporting means 3 and it is made to advance by way of the conveyors 4 along the advancement direction defined by those conveyors, until the front end of the food product 100 is brought to the winding device 5, after which the conveyors 4 are stopped.

At this point, the winding device 5 is activated and, making the movement ring 9 rotate about its own axis, with the contact body 20 in the advanced position, at each turn of the feeding means 7 the twine 6 is made to pass in front of the catch 13a, so as to execute multiple annular windings 15 around the front end of the food product 100 which make it possible to fix the twine 6 to the food product 100.

After having executed a certain number of windings 15, the locking means 13, by way of the transition of the catch 13a from the closed condition to the open condition, releases the free end of the twine 6, which is brought onto the food product 100 and the food product 100 is moved in the advancement direction of the conveyors 4, so as to execute the subsequent windings 15 in a helix around the food product, which makes it possible to retain the free end of the twine 6 on the food product 100. In the meantime, the catch 13a is brought to the closed condition, as in the situation shown in Figure 18.

Subsequently, the movement of the food product 100 in the advancement direction continues so that the winding device 5 can execute further windings 15 in a helix along all the longitudinal extension of the food product 100.

At this point, the conveyors 4 are stopped and, after having optionally applied at least another annular winding 15, the contact body 20 is brought to the retracted position, so that the twine 6 can engage the catch 13a, settling in the reception groove of the shank 13c, in order to form the second length 17 of twine 6 which will be used for tying the knot.

The further rotation of the movement ring 9, with the twine 6 engaged with the catch 13a, makes it possible first to form the first length of twine 16 and subsequently a third length 27 of twine 6, which is also engaged by the catch 13a and then locked, first by making the catch 13a pass from the closed condition, in which it lies, to the open condition, so that the third length 27 can be brought into engagement with the shaft 13d, and then by making the catch 13a pass from the open condition to the closed condition, so as to clamp the third length 27 between the head 13b and the shank 13c, as shown in Figure 19.

At this point, the tying means are activated so as to make the connection by way of knot of the first length 16, of the second length 17 and also of the third length 27 of twine which are thus formed. In particular, as described previously, the contact element 20 of the insertion device 19 is moved from the inoperative position to the operative position, so as to pick up the second length 17 and the third length 27 of the twine 6, and the auxiliary positioning device 21 is activated with consequent movement of the engagement element 22 from the inactive position to the active position, so as to bring the first length 16 of the twine 6 to a grip position in which it can be engaged by the contact element 20.

Subsequently, the portions of the first length 16, the second length 17 and the third length 27 of the twine 6, which are engaged with the contact element 20 in the operative position, are picked up by the tying device 18 which ties them together with a knot.

Once the above mentioned lengths of the twine 6 are knotted by the tying device 18, the cutting means cut the first length 16, the second length 17 and the third length 27 of the twine 6. The twine 6, thus knotted and cut, will be brought onto the food product 100, leaving the portion of the third length 27 which is connected to the feeding means 7 engaged with the catch 13a.

In practice it has been found that the invention fully achieves the intended aim and objects by providing a machine for tying food products that can function correctly irrespective of the dimensions of the food products to be tied.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (1) for tying food products, which comprises a fixed framework (2) which supports supporting means (3) for at least one food product (100) to be tied and is provided with a winding device (5) adapted to wind at least one twine (6) around said food product (100), said winding device (5) comprising feeding means (7) for feeding said twine (6), means for moving said feeding means (7) along a circular trajectory around said supporting means (3), locking means (13) for locking at least one portion of said twine (6) with respect to said fixed framework (2), and guiding means (14) for guiding said twine (6) toward and around said food product (100) in order to form at least one winding (15) of said twine (6) around said food product (100), tying means being provided which are adapted to mutually connect a first length (16) of said twine (6), which extends from said locking means (13) toward said food product (100), and at least one second length (17) of said twine (6), which extends from said food product (100) toward said feeding means (7), said tying means comprising a tying device (18), which is adapted to tie a connecting knot between said first length (16) and said second length (17) of said twine (6), and an insertion device (19) for inserting said first length (16) and said second length (17) of said twine (6), which cooperates with said tying device (18) to feed said tying device (18) with at least one portion of said first length (16) and of said second length (17) of said twine (6), said insertion device (19) having at least one contact element (20) which is designed to engage said first length (16) and said second length (17) of said twine (6), said contact element (20) being movable on command between at least an inoperative position, in which it is spaced apart from said first length (16) and said second length (17) of said twine (6), and an operative position, in which said contact element (20) is in a preset position adapted to allow the engagement of at least one portion of said first length (16) and of said second length (17) of said twine (6) by said tying device (18), **characterized in that** it comprises an auxiliary positioning device (21), which can be activated on command to bring at least one portion of at least one of said lengths (16, 17) of said twine (6) into a grip position located along the region affected by the movement of said contact element (20) between said inoperative position and said operative position.

2. The machine according to claim 1, **characterized in that** said auxiliary positioning device (21) comprises an engagement element (22) which can be actuated to move, with respect to said fixed framework (2), to engage at least said first length (16) of said twine (6) and bring, as a consequence of its movement, at least one portion of said first length (16) of said twine (6) to said grip position.

3. The machine according to claim 2, **characterized in that** said engagement element (22) is arranged between said locking means (13) said twine (6) and said supporting means (3) of said food product (100) and can move between an inactive position, in which it is disengaged from said first length (16) of said twine (6), and an active position, in which it is engaged with said first length (17) of said twine (6) in order to arrange, in said grip position, a portion of said first length (16) located between said engagement element (22) in said active position and said locking means (13), actuation means (23) being provided which are adapted to actuate the transition of said engagement element (22) between said inactive position and said active position.

4. The machine according to claim 2 or claim 3, **characterized in that** said engagement element (22) comprises a lever (24) which can oscillate, with respect to said fixed framework, about a rotation axis (24a) substantially perpendicular to the axis of said at least one winding (15), and which is provided with an engagement end (24b) for said first length (16) of said twine (6), said actuation means (23) comprising a pneumatic cylinder (25) which acts between said lever (24) and said fixed framework (2).

## Patentansprüche

1. Eine Maschine (1) zum Binden von Lebensmittelprodukten, die einen festen Rahmen (2) umfasst, welcher Tragmittel (3) für mindestens ein zu bindendes Lebensmittelprodukt (100) trägt und mit einer Aufwickelvorrichtung (5) ausgestattet ist, die ausgebildet ist, um mindestens einen Faden (6) um das Lebensmittelprodukt (100) zu wickeln, wobei die Aufwickelvorrichtung (5) Folgendes umfasst: Zuführmittel (7) zum Zuführen des Fadens (6), Mittel zum Bewegen der Zuführmittel (7) entlang einer Kreistrajektorie um die Tragmittel (3) herum, Blockiermittel (13) zum Blockieren mindestens eines Abschnitts des Fadens (6) mit Bezug auf den festen Rahmen (2) und Führungsmittel (14) zum Führen des Fadens (6) zu und um das Lebensmittelprodukt (100), um mindestens eine Wicklung (15) des Fadens (6) um das Lebensmittelprodukt (100) herum zu formen, wobei Bindungsmittel bereitgestellt sind, die ausgebildet sind, um eine erste Länge (16) des Fadens (6), die sich von den Blockiermitteln (13) zu dem Lebensmittelprodukt (100) erstreckt, und mindestens eine zweite Länge (17) des Fadens (6) miteinander zu verbinden, die sich von dem Lebensmittelprodukt (100) zu den Zuführmitteln (7) erstreckt, wobei die Bindungsmittel eine Bindevorrichtung (18) umfassen, die ausgebildet ist, um einen Verbindungsknoten zwischen der ersten Länge (16) und der zweiten Länge (17) des Fadens (6) zu binden, und eine Einführvorrichtung (19) zum Einführen der ersten Länge (16) und der zweiten Länge (17) des Fadens (6), die mit der Bindevorrichtung (18) zusammenarbeitet, um der Bindevorrichtung (18) mindestens einen Abschnitt der ersten Länge (16) und der zweiten Länge (17) des Fadens (6) zuzuführen, wobei die Einführvorrichtung (19) mindestens ein Kontaktelement (20) hat, das dazu dient, die erste Länge (16) und die zweite Länge (17) des Fadens (6) zu halten, wobei das Kontaktelement (20) auf Befehl beweglich ist zwischen mindestens einer Ruhestellung, in welcher es von der ersten Länge (16) und der zweiten Länge (17) des Fadens (6) beabstandet ist, und einer Arbeitsstellung, in welcher das Kontaktelement (20) sich in einer voreingestellten Position befindet, die geeignet ist, den Eingriff in mindestens einen Abschnitt der ersten Länge (16) und der zweiten Länge (17) des Fadens (6) durch die Bindevorrichtung (18) zu ermöglichen; **dadurch gekennzeichnet, dass** sie eine zusätzliche Positioniervorrichtung (21) umfasst, die auf Befehl aktiviert werden kann, um mindestens einen Abschnitt mindestens einer der Längen (16, 17) des Fadens (6) in eine Greifposition zu bringen, die sich entlang dem Bereich befindet, welcher von der Bewegung des Kontaktelements (20) zwischen der Ruhestellung und der Arbeitsstellung beeinflusst wird.

2. Die Maschine gemäß Anspruch 1, **dadurch gekennzeichnet, dass** die zusätzliche Positioniervorrichtung (21) ein Eingriffselement (22) umfasst, das betätigt werden kann, um sich im Verhältnis zu dem festen Rahmen (2) zu bewegen, um mindestens die erste Länge (16) des Fadens (6) zu halten und infolge seiner Bewegung mindestens einen Abschnitt der ersten Länge (16) des Fadens (6) in die Greifposition zu bringen.

3. Die Maschine gemäß Anspruch 2, **dadurch gekennzeichnet, dass** das Eingriffselement (22) zwischen den Blockiermitteln (13), dem Faden (6) und den Tragmitteln (3) des Lebensmittelprodukts (100) angeordnet ist und sich zwischen einer inaktiven Position, in welcher es nicht in Eingriff mit der ersten Länge (16) des Fadens (6) steht, und einer aktiven Position bewegen kann, in welcher es mit der ersten Länge (17) des Fadens (6) in Eingriff steht, um in der Greifposition einen Abschnitt der ersten Länge (16), der sich in der aktiven Position zwischen dem Eingriffselement (22) und den Blockiermitteln (13) befindet, anzuordnen, wobei Antriebsmittel (23) bereitgestellt sind, die ausgebildet sind, um den Übergang des Eingriffselements (22) zwischen der inaktiven Position und der aktiven Position anzutreiben.

4. Die Maschine gemäß Anspruch 2 oder Anspruch 3, **dadurch gekennzeichnet, dass** das Eingriffselement (22) einen Hebel (24) umfasst, welcher im Verhältnis zu dem festen Rahmen um eine Drehachse (24a) oszillieren kann, die im Wesentlichen senkrecht zur Achse der mindestens einen Wicklung (15) ist, und der mit einem Eingriffsende (24b) für die erste Länge (16) des Fadens (6) ausgestattet ist; wobei die Antriebsmittel (23) einen Pneumatikzylinder (25) umfassen, der zwischen dem Hebel (24) und dem festen Rahmen (2) arbeitet.

## Revendications

1. Machine (1) pour ficeler des produits alimentaires, qui comprend un cadre fixe (2) qui supporte des moyens de support (3) pour au moins un produit alimentaire (100) destiné à être ficelé et est pourvu d'un dispositif d'enroulement (5) adapté pour enroulé au moins une ficelle (6) autour dudit produit alimentaire (100), ledit dispositif d'enroulement (5) comprenant des moyens d'alimentation (7) pour alimenter ladite ficelle (6), des moyens pour déplacer lesdits moyens d'alimentation (7) le long d'une trajectoire circulaire autour desdits moyens de support (3), des moyens de blocage (13) pour bloquer au moins une partie de ladite ficelle (6) par rapport audit cadre fixe (2), et des moyens de guidage (14) pour guider ladite ficelle (6) vers et autour dudit produit alimentaire (100) afin de former au moins un enroulement (15) de ladite ficelle (6) autour dudit produit alimentaire (100), des moyens de ficelage étant fournis qui sont adaptés pour lier mutuellement un premier tronçon (16) de ladite ficelle (6), qui s'étend depuis lesdits moyens de blocage (13) jusqu'audit produit alimentaire (100), et au moins un second tronçon (17) de ladite ficelle (6), qui s'étend depuis ledit produit alimentaire (100) jusqu'auxdits moyens d'alimentation (7), lesdits moyens de ficelage comprenant un dispositif de ficelage (18), qui est adapté pour ficeler un nœud de liaison entre ledit premier tronçon (16) et ledit second tronçon (17) de ladite ficelle (6), et un dispositif d'insertion (19) pour insérer ledit premier tronçon (16) et ledit second tronçon (17) de ladite ficelle (6), qui coopère avec ledit dispositif de ficelage (18) pour alimenter ledit dispositif de ficelage (18) avec au moins une partie dudit premier tronçon (16) et dudit second tronçon (17) de ladite ficelle (6), ledit dispositif d'insertion (19) ayant au moins un élément de contact (20) qui est conçu pour venir en prise avec ledit premier tronçon (16) et ledit second tronçon (17) de ladite ficelle (6), ledit élément de contact (20) étant mobile sur ordre entre au moins une position non fonctionnelle, dans laquelle il est espacé dudit premier tronçon (16) et dudit second tronçon (17) de ladite ficelle (6), et une position fonctionnelle, dans laquelle ledit élément de contact (20) est dans une position préétablie adaptée pour permettre la prise d'au moins une partie dudit premier tronçon (16) et dudit second tronçon (17) de ladite ficelle (6) par ledit dispositif de ficelage (18), **caractérisée en ce qu'**elle comprend un dispositif de positionnement auxiliaire (21), qui peut être activé sur ordre pour amener au moins une partie d'au moins un desdits tronçons (16, 17) de ladite ficelle (6) dans une position d'agrippement située le long de la région affectée par le mouvement dudit élément de contact (20) entre ladite position non fonctionnelle et ladite position fonctionnelle.

2. Machine selon la revendication 1, **caractérisée en ce que** ledit dispositif de positionnement auxiliaire (21) comprend un élément de prise (22) qui peut être actionné pour se déplacer, par rapport audit cadre fixe (2), pour venir en prise au moins avec ledit premier tronçon (16) de ladite ficelle (6) et amener, en conséquence de son mouvement, au moins une partie dudit premier tronçon (16) de ladite ficelle (6) dans ladite position d'agrippement.

3. Machine selon la revendication 2, **caractérisée en ce que** ledit élément de prise (22) est agencé entre lesdits moyens de blocage (13) ladite ficelle (6) et lesdits moyens de support (3) dudit produit alimentaire (100) et peut se déplacer entre une position inactive, dans laquelle il est hors de prise dudit premier tronçon (16) de ladite ficelle (6), et une position active, dans laquelle il est en prise avec ledit premier tronçon (17) de ladite ficelle (6) afin d'agencer, dans ladite position d'agrippement, une partie dudit premier tronçon (16) située entre ledit élément de prise (22) dans ladite position active et lesdits moyens de blocage (13), des moyens d'actionnement (23) étant fournis qui sont adaptés pour actionner la transition dudit élément de prise (22) entre ladite position inactive et ladite position active.

4. Machine selon la revendication 2 ou la revendication 3, **caractérisée en ce que** ledit élément de prise (22) comprend un levier (24) qui peut osciller, par rapport audit cadre fixe, autour d'un axe de rotation (24a) sensiblement perpendiculaire à l'axe dudit au moins un enroulement (15), et qui est pourvu d'une extrémité de prise (24b) pour ledit premier tronçon (16) de ladite ficelle (6), lesdits moyens d'actionnement (23) comprenant un vérin pneumatique (25) qui agit entre ledit levier (24) et ledit cadre fixe (2)
